# EUROPÄISCHE PATENTSCHRIFT

(11) **EP 4 124 438 B1**
(45) Veröffentlichungstag und Bekanntmachung des Hinweises auf die Patenterteilung: **20.09.2023**
(21) Anmeldenummer: 21188659.3
(22) Anmeldetag: 30.07.2021
(51) Int. Cl.: B29C 45/27

(54) **HEISSKANALDÜSE**
HOT RUNNER NOZZLE
BUSE DE CANAL CHAUD

(43) Veröffentlichungstag der Anmeldung: 01.02.2023
(73) Patentinhaber: Witosa GmbH, 35066 Frankenberg/Wangershausen (DE)
(72) Erfinder: HALLENBERGER, Martin, 35088 Frohnhausen (DE); GLITTENBERG, Torsten, 35066 Frankenberg (DE)
(74) Vertreter: Walther Bayer Faber Patentanwälte PartGmbB

(56) Entgegenhaltungen:
- WO-A1-2010/014485
- CN-A- 106 239 841
- CN-U- 212 948 956
- US-A1- 2010 015 275

## Beschreibung

Die Erfindung betrifft eine Heißkanaldüse für Spritzgießformen, aufweisend ein Düsenrohr, in dem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze austreibbar ist, wobei ein Anlagekragen zur dichtenden Anlage gegen die Spritzgießform vorgesehen ist, und wobei wenigstens das Düsenrohr und/oder die Düsenspitze und/oder der Anlagekragen mittels eines generativen Fertigungsverfahrens als einteiliger Grundkörper hergestellt sind.

### STAND DER TECHNIK

Aus der DE 10 2006 029 152 A1 ist eine gattungsbildende Heißkanaldüse für Spritzgießformen bekannt. Derartige Heißkanaldüsen dienen dazu, eine vorgeheizte, plastifizierte Kunststoffmasse in eine Spritzgießform einzuspritzen, wobei die Heißkanaldüse mit der Düsenspitze in die Kavität der Spritzgießform mündet. Ist der Spritzguss erfolgt, so schließt sich eine Abkühlphase an, während der die Kunststoffschmelze für den bereits nächsten Spritzgussschritt in der Heißkanaldüse im plastifizierten Zustand vorgehalten werden muss. Hierzu ist die Heißkanaldüse beheizt, wobei moderne, insbesondere hoch additivierte Kunststoffe in einem nur schmalen Temperaturband vorgehalten werden dürfen, ohne dass die Kunststoffschmelze bei zu niedriger Temperatur entweder bereits erstarrt und der Folgeprozess unmöglich wird, oder die Kunststoffmasse überhitzt, sodass sich insbesondere aufadditivierte Bestandteile der Kunststoffmasse zersetzen und die späteren Spezifikationen eines aus der Kunststoffmasse gespritzten Bauteils nicht eingehalten werden können.

Daraus ergibt sich die Forderung, eine Heißkanaldüse über der möglichst gesamten Länge von der Kanaleintrittsseite bis zur Düsenspitze so zu beheizen, dass sich eine gleichmäßige Temperaturverteilung ergibt, auch wenn der Anlagekragen im Bereich der Düsenspitze gegen die Spritzgießform dichtend zur Anlage gebracht ist und durch die kalte Spritzgießform auskühlen kann. Folgerichtig ergibt sich insbesondere die Schwierigkeit, die Düsenspitze sowie den gesamten Grundkörper vor allem auch im Bereich des Düsenrohres derart zu temperieren, dass die Düsenspitze trotz der Wärmeableitung über die Anlage des Anlagekragens zur Spritzgießform die geforderte Temperatur hält, ohne dass sich über der Längserstreckung des Düsenrohrs in gewisser Weise ein Temperaturbauch ergibt, und sich der Kunststoff im Durchtrittskanal auf der Länge des Düsenrohres überhitzt und damit zersetzt.

Die US 2016/0151948 A1 offenbart eine Heißkanaldüse für Spritzgießformen, aufweisend ein Düsenrohr, in dem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze austreibbar ist, wobei ein Anlagekragen zur dichtenden Anlage gegen die Spritzgießform vorgesehen ist, und wobei wenigstens das Düsenrohr, die Düsenspitze und der Anlagekragen mittels eines generativen Fertigungsverfahrens als einteiliger Grundkörper hergestellt sind.

Die Temperaturverteilung innerhalb des Grundkörpers der Heißkanaldüse spielt dabei eine wesentliche Rolle, um die Kunststoffschmelze möglichst bei gleichbleibender Temperatur von der Kanaleintrittsseite bis zum Austrittskanal durch die Heißkanaldüse zu führen. Bei zu dickwandiger Auslegung des Grundkörpers entsteht eine zu große Wärmeleitung, insbesondere eine zu große Auskühlung in Kontakt mit den Umbauteilen der Heißkanaldüse, und wenn der Grundkörper zu dünnwandig ausgelegt wird, dann ist die mechanische Stabilität nicht mehr gewährleistet, da der Grundkörper der Heißkanaldüse sehr großen thermischen Verspannungen ausgesetzt sein kann.

### OFFENBARUNG DER ERFINDUNG

Die Aufgabe der Erfindung besteht in der weiteren Verbesserung einer Heißkanaldüse mit einem optimierten Grundkörper bzw. mit einem Grundkörper, der durch eingebrachte geometrische Mittel weiter optimierbar ist. Die Optimierung betrifft einerseits ein optimales Wärmeleitverhalten im Grundkörper der Heißkanaldüse, andererseits soll die Heißkanaldüse großen mechanischen Spannungen standhalten können.

Es soll insofern einerseits eine Gestalt der Heißkanaldüse geschaffen werden, die eine homogene Temperatur für die im Durchtrittskanal geführte Kunststoffschmelze ermöglicht und zugleich soll die Heißkanaldüse möglichst stabil ausgelegt sein.

Erfindungsgemäß ist zur Lösung der vorstehenden Aufgabe vorgesehen, dass der Grundkörper abschnittsweise eine Wabenstruktur aufweist.

Der Grundkörper besitzt eine näherungsweise zylinderförmige Gestalt, wobei die Wabenstruktur wenigstens abschnittsweise auf der Mantelfläche des zylinderförmigen Grundkörpers ausgebildet ist. Durch die Wabenstruktur entsteht ein etwa gitterförmiges Düsenrohr, und die Wabenstruktur besitzt Öffnungen, zwischen denen sich Stege erstrecken. Die Öffnungen weisen eine Kontur auf, die vorzugsweise einem Sechskant entspricht, und die Stege befinden sich zwischen den Sechskantstrukturen.

Der Anlagekragen kann dabei einen radial nach außen geformten, kragenartigen Bereich aufweisen, mit dem dieser gegen das Spritzgießwerkzeug anliegt. Im Sinne der vorliegenden Erfindung umfasst der Anlagekragen aber auch solche Anlagebereiche oder Anformungen, die beispielsweise zylindrisch ausgeführt sind, und die eigentliche Kragenform ist vorliegend nicht zwingend Bestandteil des Anlagekragens. Der Anlagekragen gemäß der Erfindung betrifft insoweit alle möglichen Anlagebereiche einer Heißkanaldüse, die zur Anlage gegen ein Spritzgießwerkzeug vorgesehen sind, auch solche, die nicht direkt eine kragenartige Ausformung aufweisen, etwa zylindrische Außendichtungen.

Die Düsenspitze umfasst im Sinne der vorliegenden Erfindung auch alle Abwandlungen von einer Spitzenform, beispielsweise umfasst die Düsenspitze im Sinne der Erfindung auch Mündungsöffnungen oder sonstige Formen von Öffnungen, die dazu ausgebildet sind, eine plastifizierte Kunststoffschmelze in die Kavität einer Spritzgießform zu spritzen. Insofern sind vorliegend mit der beschriebenen Düsenspitze auch Mündungsöffnungen mit umfasst, die beispielsweise bei Heißkanaldüsen mit einem Nadelverschluss auftreten.

Im Rahmen der Erfindung sollen Wabenstrukturen auch Öffnungskonturen mit umfassen, die von einer sechseckigen Kontur abweichen, insofern also kreisrund oder oval ausgeführt werden können oder ein sonstiges Vieleck bilden, beispielsweise ein Dreieck oder ein Viereck. Die sechseckige Innenkontur bildet dabei eine lediglich bevorzugte Form der Wabenstruktur, da diese Struktur den geringsten Materialeinsatz ermöglicht.

Durch die Breite der Stege, durch die Anzahl der Waben auf einer definierten Fläche und durch die Größe der wabenförmigen Öffnungen kann eine Wärmeleitung, insbesondere im Düsenrohr, definiert beeinflusst werden, wobei trotz der in das Düsenrohr eingebrachten Öffnungen eine hohe Gesamtsteifigkeit der Heißkanaldüse erhalten bleibt. Mit der Auslegung des Düsenrohres mit der Wabenstruktur kann folglich auch das Wärmeleitverhalten in und aus der Düsenspitze beeinflusst werden.

Die Öffnungen müssen dabei nicht durchgängig sein, und die Wabenstruktur kann auch durch Vertiefungen gebildet sein, die eine sechseckförmige oder sechskantförmige Struktur besitzen. Die Öffnungen im Sinne der vorliegenden Erfindung sind insofern sowohl Durchgänge als auch lediglich als Vertiefungen anzusehen.

Das Düsenrohr ist auf seiner überwiegenden Länge mit einem inneren Rohrkörper und einem äußeren Rohrkörper ausgebildet, wobei der äußere Rohrkörper den inneren Rohrkörper konzentrisch umschließt. Im inneren Rohrkörper ist der Durchtrittskanal für die Kunststoffschmelze ausgebildet, und zwischen der Außenseite des inneren Rohrkörpers und der Innenseite des äußeren Rohrkörpers ist ein umlaufender Hohlraum ausgebildet. Die Wabenstruktur ist dabei wenigstens abschnittsweise im äußeren Rohrkörper eingebracht.

Einige der Öffnungen der Wabenstruktur können einen freien Durchgang vom umlaufenden Hohlraum zur Außenseite des äußeren Rohrkörpers bilden. Auch kann vorgesehen sein, dass einige der Öffnungen einen Verschlusseinsatz aufweisen, der den sonst freien Durchgang vom umlaufenden Hohlraum zur Außenseite des äußeren Rohrkörpers verschließt. Unter Berücksichtigung der erforderlichen Steifigkeit des Rohrkörpers, und unter Berücksichtigung der erforderlichen Wärmeleitungseigenschaften besteht die Möglichkeit, dass mit den Verschlusseinsätzen in den Öffnungen ein Wärmeleitprofil im äußeren Rohrkörper geschaffen wird, das für eine optimale Temperaturverteilung sorgt.

Befinden sich die Verschlusseinsätze in den Öffnungen, so ist auch eine Zirkulation von Luft zwischen dem umlaufenden Hohlraum und der Außenseite des äußeren Rohrkörpers verhindert, und sind keine Verschlusseinsätze eingebracht, kann eine Zirkulation stattfinden. Öffnungen mit Verschlusseinsätzen sind ferner besser wärmeleitend als Öffnungen ohne Verschlusseinsätze, sodass mittels der Verteilung der Verschlusseinsätze die Wärmeleitung im Düsenrohr gezielt beeinflusst werden kann.

Die Anzahl der Verschlusseinsätze in Bezug auf die Anzahl der Öffnungen kann in Richtung zur Düsenspitze hin abnehmen oder es ist vorgesehen, dass die Öffnungen, die an den Bereich der Düsenspitze angrenzen, frei von Verschlusseinsätzen ausgebildet sind und die Öffnungen, die sich in Richtung zur Kanaleintrittsseite im äußeren Rohrkörper befinden, weisen vermehrt vollständige Verschlusseinsätze auf. Im vorliegenden Sinne ist es insofern möglich, einzelne Öffnungen mit Verschlusseinsätzen zu versehen und einzelne Öffnungen frei durchgängig zu belassen.

Eine weitere Variation kann darin geschaffen werden, dass die Verschlusseinsätze unterschiedlich tief in den Öffnungen eingebracht sind. Sind die Verschlusseinsätze tief in den Öffnungen eingebracht, so weisen die Öffnungen von der Außenseite des äußeren Rohrkörpers betrachtet eine größere Tiefe auf, und sind die Verschlusseinsätze weniger tief eingebracht, so sind die Öffnungen auch in einer von der Außenseite des äußeren Rohrkörpers betrachtet geringeren Tiefe ausgeführt. Dabei kann es vorteilhaft sein, wenn die Verschlusseinsätze in den näher an der Kanaleintrittsseite liegenden Öffnungen von der Außenoberfläche des äußeren Rohrkörpers gesehen, tieferliegend in den Öffnungen eingebracht sind.

Die Verschlusseinsätze sind gemeinsam mit dem Grundkörper und damit auch gemeinsam mit dem Düsenrohr umfassend den äußeren Rohrkörper ausgebildet und im generativen Fertigungsverfahren einteilig mit dem Grundkörper hergestellt. So gehen die Verschlusseinsätze in die zwischen den Öffnungen der Wabenstruktur vorhandenen Stege einteilig über, sodass die Verschlusseinsätze insgesamt einteilig mit der Wabenstruktur im generativen Fertigungsverfahren hergestellt sind.

Der Grundkörper weist am unteren mit der Kanaleintrittsseite abschließenden Ende einen Sockelabschnitt auf, und unterhalb der Düsenspitze ist ein Stützabschnitt vorgesehen, wobei sich der umlaufende Hohlraum entlang der Mittelachse vom Sockelabschnitt bis zum Stützabschnitt erstreckt. Dabei kann die Wabenstruktur wenigstens teilweise oder auch über der gesamten Länge des umlaufenden Hohlraums im äußeren Rohrkörper eingebracht sein.

Auf dem Sockelabschnitt ist gemäß einer vorteilhaften weiteren Ausbildung der Heißkanaldüse eine Befestigungsmutter verliersicher aufgebracht, mittels der die Heißkanaldüse an einer Verteilerplatte befestigbar ist. Werden aufgrund thermischer Verspannungen über den Anlagekragen auf der oberen Endseite des Grundkörpers zumeist seitliche Kräfte eingebracht, so kommt es zu großen Biegespannungen im Grundkörper, die mit der Wabenstruktur trotz der filigranen Ausgestaltung des äußeren Hohlrohres gut abgefangen werden können. Die Heißkanaldüse weist insofern eine hohe mechanische Steifigkeit auf, wobei zugleich ein verringerter Werkstoffeinsatz mit der Wabenstruktur einhergeht, und wobei ein gezieltes Wärmeleitungsprofil auf dem Grundkörper aufgeprägt werden kann, das zu einer solchen optimalen Temperaturverteilung im Einsatz der Heißkanaldüse führt, sodass die Kunststoffschmelze im Wesentlichen mit gleicher Temperatur von der Kanaleintrittsseite durch den Durchtrittskanal hindurch bis zum Austrittskanal in der Düsenspitze geführt werden kann.

Die Öffnungen der Wabenstruktur können ein Öffnungsmaß aufweisen, das etwa 15% bis 25% des Außendurchmessers des Düsenrohres entspricht. Die Stege können eine Breite aufweisen, die etwa 20% bis 60% und bevorzugt 25% bis 50% des Diagonalmaßes der Öffnungen entspricht.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Seitenansicht der Heißkanaldüse,
- Figur 2: eine Querschnittsansicht der Heißkanaldüse und
- Figur 3: eine Detailansicht der Heißkanaldüse im unteren Bereich mit der im generativen Verfahren hergestellten und damit zugleich verliersicher aufgebrachten Befestigungsmutter.

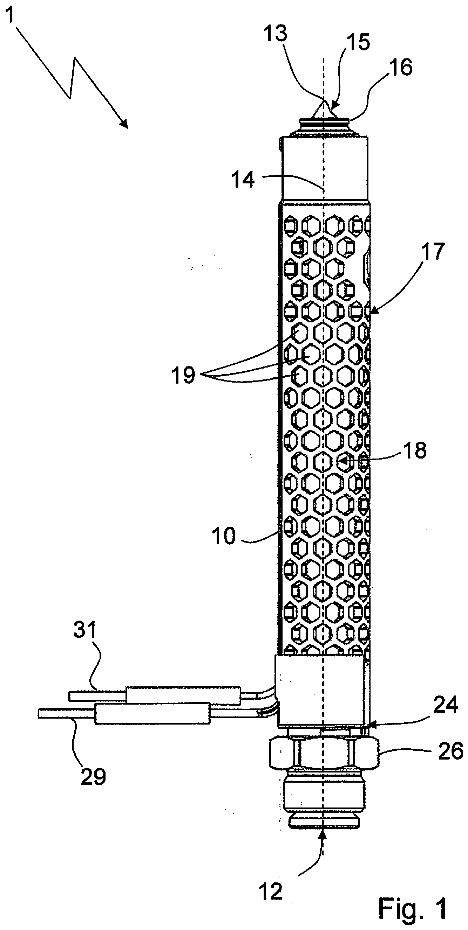

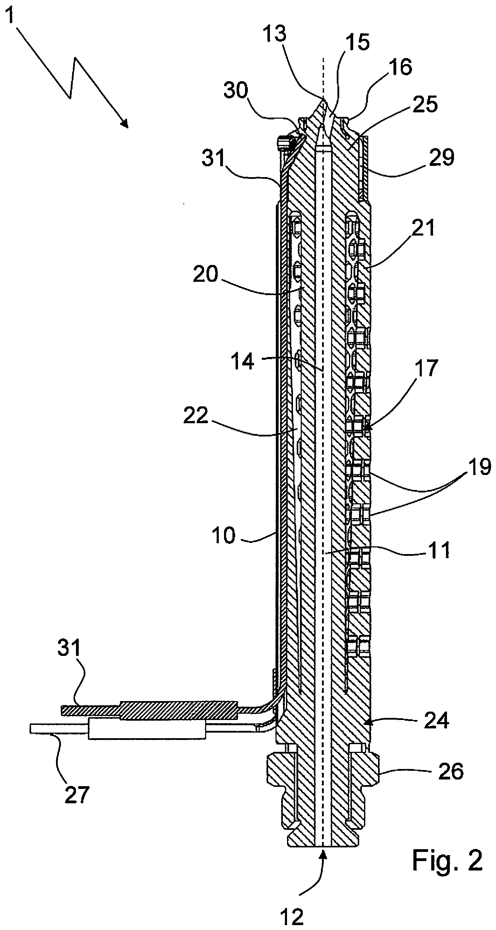

Die Figuren 1 und 2 zeigen eine Heißkanaldüse 1, und in Figur 1 ist diese in einer Seitenansicht gezeigt, wobei Figur 2 die Heißkanaldüse 1 in einer aufgeschnittenen Querschnittsansicht darstellt.

Die Heißkanaldüse 1 dient zum Einbau in Spritzgießformen, und diese weist ein Düsenrohr 10 mit einem im Düsenrohr 10 ausgebildeten Durchtrittskanal 11 zum Durchtritt einer Kunststoffschmelze auf. Der Durchtrittskanal 11 erstreckt sich von einer rückseitigen Kanaleintrittsseite 12 bis zu einer vorderseitigen Düsenspitze 13 entlang einer Mittelachse 14, und der Düsenkanal 11 mündet in wenigstens einem Austrittskanal 15, der unter einem Winkel zur Mittelachse 14 in der Düsenspitze 13 eingebracht ist. Wird die Heißkanaldüse 1 mit der unteren Kanaleintrittsseite 12 auf einer Verteilerplatte aufgebracht, kann über die Kanaleintrittsseite 12 die Kunststoffschmelze im Durchtrittskanal 11 eintreten und vorderseitig aus dem Austrittskanal 15 in die Spritzgießform austreten. Ferner weist die Heißkanaldüse 1 einen Anlagekragen 16 auf, der die Düsenspitze 13 voll umfänglich umschließt. Mit dem Anlagekragen 16 gelangt die Heißkanaldüse 1 in Anlage zur Spritzgießform, wobei die Heißkanaldüse 1 mit der unteren Kanaleintrittsseite 12 auf der Verteilerplatte aufgebracht wird.

Die dargestellte Heißkanaldüse 1 gemäß der Erfindung weist einen monolithischen, dass heißt einteiligen Grundkörper 17 auf, der sich einstückig von der Kanaleintrittsseite 12 bis zum oberen Ende der Düsenspitze 13 erstreckt. Der Grundkörper 17 umfasst insofern wenigstens das Düsenrohr 10 mit dem Durchtrittskanal 11, die Düsenspitze 13 und den Anlagekragen 16. Zur Herstellung des einteiligen Grundkörpers 17 kommt ein generatives Fertigungsverfahren zum Einsatz, beispielsweise ein SLM-Verfahren.

Gemäß der Erfindung weist der Grundkörper 17 abschnittsweise eine Wabenstruktur 18 auf. Die Wabenstruktur 18 bildet Öffnungen 19 im Düsenrohr 10, die eine sechseckige Innenkontur besitzen. Das Düsenrohr 10 ist aufgebaut aus einem inneren Rohrkörper 20 und einem äußeren Rohrkörper 21, wobei im inneren Rohrkörper 20 der Durchtrittskanal 11 zur Hindurchführung der Kunststoffschmelze ausgebildet ist. Der äußere Rohrkörper 21 umschließt unter Bildung eines umlaufenden Hohlraums 22 den inneren Rohrkörper 20, und die Öffnungen 19 der Wabenstruktur 18 bilden Durchgänge zwischen dem umlaufenden Hohlraum 22 und der Außenseite des äußeren Rohrkörpers 21.

Am unteren Ende der Heißkanaldüse 1 im Bereich der Kanaleintrittsseite 12 befindet sich eine Befestigungsmutter 26, die auf einem Sockelabschnitt 24 des Grundkörpers 17 verliersicher aufgenommen ist. Mit der Befestigungsmutter 26 kann die Heißkanaldüse 1 an einer Verteilerplatte montiert werden, indem die Befestigungsmutter 26 ohne Drehung des Grundkörpers 17 um die Mittelachse 14 in Rotation versetzt wird. Die Befestigungsmutter 26 ist gemeinsam mit dem Grundkörper 17 im generativen Fertigungsverfahren hergestellt worden, und kann dadurch mit einem Formschluss auf dem Sockelabschnitt 24 verliersicher aufgebracht werden.

Der umlaufende Hohlraum 22 erstreckt sich entlang der Mittelachse 14 vom Sockelabschnitt 24 bis zum Stützabschnitt 25, wobei sich der Stützabschnitt 25 unterhalb der Düsenspitze 13 befindet. Die Wabenstruktur 18 endet vor dem Stützabschnitt 25, und außenseitig um den Stützabschnitt 25 herum ist ein Heizdraht 29 aufgebracht, der seitlich am Düsenrohr 10 nach außen geführt wird. Weiterhin ist ein Temperaturmesssensor 30 in der Düsenspitze 13 eingebracht, und ein zugehöriges Signalkabel 31 ist ebenfalls außenseitig am Düsenrohr 10 entlang geführt angeordnet.

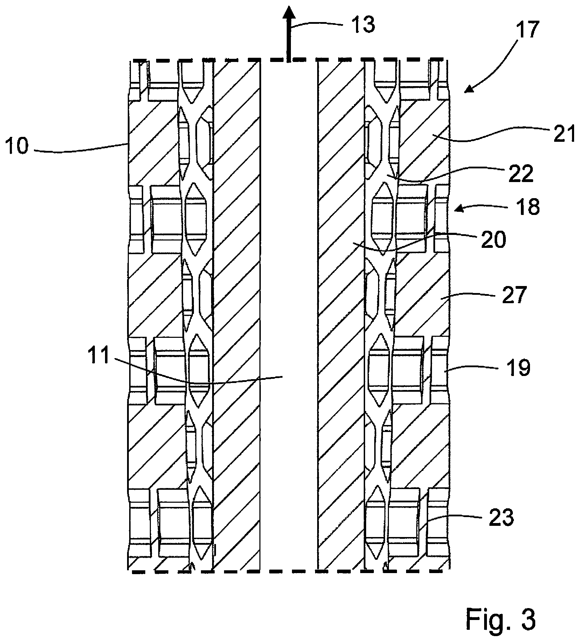

Figur 3 zeigt in einer vergrößerten Ansicht einen Abschnitt des Düsenrohres 10 mit dem inneren Rohrkörper 20 und dem äußeren Rohrkörper 21, und die Ansicht zeigt den umlaufenden Hohlraum 22 zwischen dem inneren und äußeren Rohrkörper 20, 21. Im inneren Rohrkörper 20 ist der Durchtrittskanal 11 ausgebildet, und der innere Rohrkörper 20 weist über seiner wesentlichen Länge einen konstanten Rohrquerschnitt auf, sodass der innere Rohrkörper 20 einen konstanten inneren Durchmesser und einem konstanten äußeren Durchmesser besitzt.

Der äußere Rohrkörper 21 besitzt einen über seiner Länge gleichbleibenden äußeren Durchmesser, wobei der innere Durchmesser in Richtung zur Düsenspitze 13 hin größer wird, angedeutet durch einen Pfeil, der in Richtung zur Düsenspitze 13 zeigt. Folglich vergrößert sich auch das radiale Maß des umlaufenden Hohlraums 22.

Die Ansicht stellt in vergrößerter Weise die Wabenstruktur 18 mit den Öffnungen 19 dar, zwischen denen sich die Stege 27 befinden. In den Öffnungen 19 sind Verschlusseinsätze 23 eingebracht, die einen plattenartigen Verschluss innerhalb der Öffnungen 19 bilden. Die Verschlusseinsätze 23 sind dabei nicht grundsätzlich in jeder Öffnung 19 vorhanden, sondern diese können auch vereinzelt oder wahlweise in nur einzelnen Öffnungen 19 vorgesehen werden, um das Wärmeverteilungsverhalten im Düsenrohr 10 gezielt auch lokal zu beeinflussen.

Die Darstellung zeigt weiterhin, dass die Verschlusseinsätze 23 in Richtung zur Düsenspitze 13 hin, in der Bildebene nach oben gerichtet, weiter außen in den Öffnungen 19 eingebracht sind, sodass von außen betrachtet die Tiefe der Öffnungen 19 im äußeren Rohrkörper 21 abnimmt.

Die Verschlusseinsätze 23 sind dabei ähnlich dünnwandig ausgeführt wie die Stege 27 zwischen den Öffnungen 19. Durch das Zusammenspiel der Anzahl der Öffnungen 19 pro Fläche, durch die Breite der Stege 27 zwischen den Öffnungen 19 und durch die Anzahl, die Verteilung und die Position der Verschlusseinsätze 23 mit variabler Tiefe ermöglichen eine Optimierung sowohl des Steifigkeitsverhaltens der Heißkanaldüse 1 als auch der Temperaturverteilung im äußeren Rohrkörper 21, die Einfluss hat auf die Temperaturverteilung im inneren Rohrkörper 20, durch den die Kunststoffschmelze geführt wird. So kann die Heißkanaldüse 1 mit minimalem Materialeinsatz optimal aufgebaut werden, sodass die Kunststoffschmelze auch über dem gesamten Spritzguss im Wesentlichen konstante Temperatur beim Durchlauf durch die Heißkanaldüse 1 erfährt.

Die Erfindung ist im beigefügten Anspruchssatz beschrieben und beschränkt sich in ihrer Ausführung nicht auf das vorstehend angegebene bevorzugte Ausführungsbeispiel.

### Bezugszeichenliste:

- 1: Heißkanaldüse
- 10: Düsenrohr
- 11: Durchtrittskanal
- 12: Kanaleintrittsseite
- 13: Düsenspitze
- 14: Mittelachse
- 15: Austrittskanal
- 16: Anlagekragen
- 17: Grundkörper
- 18: Wabenstruktur
- 19: Öffnung
- 20: innerer Rohrkörper
- 21: äußerer Rohrkörper
- 22: umlaufender Hohlraum
- 23: Verschlusseinsatz
- 24: Sockelabschnitt
- 25: Stützabschnitt
- 26: Befestigungsmutter
- 27: Steg
- 28: Öffnungsmaß
- 29: Heizdraht
- 30: Temperarturmesssensor
- 31: Signalkabel

## Patentansprüche

1. Heißkanaldüse (1) für Spritzgießformen, aufweisend ein Düsenrohr (10), in dem ein Durchtrittskanal (11) zum Durchtritt einer Kunststoffschmelze ausgebildet ist, wobei sich der Durchtrittskanal (11) von einer rückseitigen Kanaleintrittsseite (12) bis zu einer vorderseitigen Düsenspitze (13) entlang einer Mittelachse (14) erstreckt und in wenigstens einem Austrittskanal (15) in der Düsenspitze (13) mündet, durch den die Kunststoffschmelze austreibbar ist, wobei ein Anlagekragen (16) zur dichtenden Anlage gegen die Spritzgießform vorgesehen ist, und wobei wenigstens das Düsenrohr (10) undloder die Düsenspitze (13) undloder der Anlagekragen (16) mittels eines generativen Fertigungsverfahrens als einteiliger Grundkörper (17) hergestellt sind,
**dadurch gekennzeichnet,**
**dass** der Grundkörper (17) abschnittsweise eine Wabenstruktur (18) aufweist.

2. Heißkanaldüse (1) nach Anspruch 1,
**dadurch gekennzeichnet,**
**dass** die Wabenstruktur (18) mittels Öffnungen (19) im Düsenrohr (10) gebildet ist, die eine sechseckige Innenkontur aufweisen.

3. Heißkanaldüse (1) nach Anspruch 1 oder 2,
**dadurch gekennzeichnet,**
**dass** das Düsenrohr (10) einen inneren Rohrkörper (20) aufweist, in dem der Durchtrittskanal (11) ausgebildet ist und wobei das Düsenrohr (10) einen den inneren Rohrkörper (20) umschließenden äußeren Rohrkörper (21) aufweist, wobei sich zwischen dem inneren Rohrkörper (20) und dem äußeren Rohrkörper (21) ein umlaufender Hohlraum (22) erstreckt, wobei die Wabenstruktur (18) im äußeren Rohrkörper (21) ausgebildet ist.

4. Heißkanaldüse (1) nach Anspruch 3,
**dadurch gekennzeichnet,**
**dass** einige der Öffnungen (19) einen freien Durchgang vom umlaufenden Hohlraum (22) zur Außenseite des äußeren Rohrkörpers (21) bilden.

5. Heißkanaldüse (1) nach Anspruch 3 oder 4,
**dadurch gekennzeichnet,**
**dass** einige der Öffnungen (19) einen Verschlusseinsatz (23) aufweisen, der den sonst freien Durchgang vom umlaufenden Hohlraum (22) zur Außenseite des äußeren Rohrkörpers (21) verschließt.

6. Heißkanaldüse (1) nach Anspruch 5,
**dadurch gekennzeichnet,**
**dass** die Anzahl der Verschlusseinsätze (23) in Bezug auf die Anzahl der Öffnungen (19) in Richtung zur Düsenspitze (13) hin abnimmt oder dass die Öffnungen (19), die an den Bereich der Düsenspitze (13) angrenzen, frei von Verschlusseinsätzen (23) ausgebildet sind und die Öffnungen (19), die sich in Richtung zur Kanaleintrittsseite (12) im äußeren Rohrkörper (21) befinden, vermehrt oder vollständig Verschlusseinsätze (23) aufweisen.

7. Heißkanaldüse (1) nach Anspruch 5 oder 6,
**dadurch gekennzeichnet,**
**dass** die Verschlusseinsätze (23) in den näher an der Kanaleintrittsseite (12) liegenden Öffnungen (19) von der Außenoberfläche des äußeren Rohrkörpers (21) gesehen tiefer liegend in den Öffnungen (19) eingebracht sind.

8. Heißkanaldüse (1) nach einem der vorgenannten Ansprüche,
**dadurch gekennzeichnet,**
**dass** die Verschlusseinsätze (23) mit zwischen den Öffnungen (19) der Wabenstruktur (18) vorhandenen Stegen (27) einteilig mit der Wabenstruktur (18) ausgebildet und im generativen Fertigungsverfahren hergestellt sind.

9. Heißkanaldüse (1) nach einem der vorgenannten Ansprüche,
**dadurch gekennzeichnet,**
**dass** der Grundkörper (17) am unteren mit der Kanaleintrittsseite (12) abschließenden Ende einen Sockelabschnitt (24) und unterhalb der Düsenspitze (13) einen Stützabschnitt (25) aufweist, wobei sich der umlaufende Hohlraum (22) entlang der Mittelachse (14) vom Sockelabschnitt (24) bis zum Stützabschnitt (25) erstreckt, wobei die Wabenstruktur (18) über der wesentlichen Länge des umlaufenden Hohlraumes (22) im äußeren Rohrkörper (21) eingebracht ist.

10. Heißkanaldüse (1) nach einem der vorgenannten Ansprüche,
**dadurch gekennzeichnet,**
**dass** auf dem Sockelabschnitt (24) eine Befestigungsmutter (26) verliersicher aufgebracht ist, mittels der die Heißkanaldüse (1) an einer Verteilerplatte befestigbar ist.

11. Heißkanaldüse (1) nach einem der vorgenannten Ansprüche,
**dadurch gekennzeichnet,**
**dass** die Öffnungen (19) ein Öffnungsmaß (28) aufweisen, das etwa 15% bis 40% des Außendurchmessers des Düsenrohres (10) entspricht.

## Claims

1. A hot runner nozzle (1) for injection molds comprising a nozzle pipe (10) in which a passage channel (11) for the passage of a plastic melt is formed, wherein the passage channel (11) extends along a center axis (14) from a rear side channel inlet side (12) up to a front side nozzle tip (13) and opens in at least one outlet channel (15) in the nozzle tip (13) through which the plastic melt can be driven, wherein a contact collar (16) for a sealing contact with the injection mold is provided, and wherein at least the nozzle pipe (10) and/or the nozzle tip (13) and/or the contact collar (16) are manufactured by means of a generative production process as a single part base member (17),
**characterized in that**
the base member (17) sectionally has a honeycomb structure (18).

2. A hot runner nozzle (1) in accordance with claim 1,
**characterized in that**
the honeycomb structure (18) is formed by means of openings (19) in the nozzle pipe (10 ) that have a hexagonal inner contour.

3. A hot runner nozzle (1) in accordance with claim 1 or claim 2,
**characterized in that**
the nozzle pipe (10) has an inner pipe member (20) in which the passage channel (11) is formed and with the nozzle pipe (10) having an outer pipe member (21) surrounding the inner pipe member (20), with a peripheral hollow space (22) extending between the inner pipe member (20) and the outer pipe member (21) and with the honeycomb structure (18) being formed in the outer pipe member (21).

4. A hot runner nozzle (1) in accordance with claim 3,
**characterized in that**
some of the openings (19) form a free passage from the peripheral hollow space (22) to the outer side of the outer pipe member (21).

5. A hot runner nozzle (1) in accordance with claim 3 or claim 4,
**characterized in that**
some of the openings (19) have a closure insert (23) that closes the otherwise free passage from the peripheral hollow space (22) to the outer side of the outer pipe member (21).

6. A hot runner nozzle (1) in accordance with claim 5,
**characterized in that**
the number of closure inserts (23) with respect to the number of openings (19) reduce in the direction toward the nozzle tip; and/or **in that** the openings (19) adjacent to the region of the nozzle tip (13) are free of closure inserts (23) and the openings (19) that are in the direction toward the channel inlet side (12) in the outer pipe member (21) have added or all closure inserts (23).

7. A hot runner nozzle (1) in accordance with claim 5 or claim 6,
**characterized in that**
the closure inserts (23) are introduced in the openings (19) disposed closer to the channel inlet side (12) more deeply in the openings (19) viewed from the outer surface of the outer pipe member (21).

8. A hot runner nozzle (1) in accordance with one of the preceding claims,
**characterized in that**
the closure inserts (23) are formed in one part with the honeycomb structure (18) with webs (27) present between the openings (19) of the honeycomb structure (18) and are manufactured in a generative production process.

9. A hot runner nozzle (1) in accordance with one of the preceding claims,
**characterized in that**
the base member (17) has a pedestal section (24) at the lower end terminating with the channel inlet side (13) and a support section (25) below the nozzle tip (13), with the peripheral hollow space (22) extending along the center axis (14) from the pedestal section (24) up to the support section (25), with the honeycomb structure (18) being introduced over the substantial length of the peripheral hollow space (22) in the outer pipe member (21).

10. A hot runner nozzle (1) in accordance with one of the preceding claims,
**characterized in that**
a fastening nut (26) by means of which the hot runner nozzle (1) is fastenable to a distributor plate by means of the hot runner nozzle (1) is captively applied to the pedestal section (24).

11. A hot runner nozzle (1) in accordance with one of the preceding claims,
**characterized in that**
the openings (19) have an opening dimension (28) that corresponds to approximately 15% to 40% of the outer diameter of the nozzle pipe (10).

## Revendications

1. Buse de canal chaud (1) pour moules de moulage par injection, présentant un tube de buse (10), dans lequel un canal de passage (11) est réalisé pour le passage d'une matière plastique fondue, le canal de passage (11) s'étendant depuis un côté entrée de canal (12) arrière jusqu'à une pointe de buse (13) avant le long d'un axe central (14) et débouchant dans au moins un canal de sortie (15) dans la pointe de buse (13), à travers lequel la matière plastique fondue peut être expulsée, un collet d'appui (16) étant prévu pour l'appui étanchéifiant contre le moule de moulage par injection et au moins le tube de buse (10) et/ou la pointe de buse (13) et/ou le collet d'appui (16) étant fabriqués comme corps de base (17) en une seule pièce au moyen d'un procédé de fabrication additive, **caractérisée en ce que**
le corps de base (17) présente sur certaines parties une structure en nid d'abeille (18).

2. Buse de canal chaud (1) selon la revendication 1,
**caractérisée en ce que**
la structure en nid d'abeille (18) est formée au moyen d'ouvertures (19) dans le tube de buse (10), qui présentent un contour intérieur hexagonal.

3. Buse de canal chaud (1) selon la revendication 1 ou 2,
**caractérisée en ce que**
**en ce que** le tube de buse (10) présente un corps de tube intérieur (20), dans lequel le canal de passage (11) est réalisé et le tube de buse (10) présentant un corps de tube extérieur (21) entourant le corps de tube intérieur (20), une cavité périphérique (22) s'étendant entre le corps de tube intérieur (20) et le corps de tube extérieur (21), la structure en nid d'abeille (18) étant réalisée dans le corps de tube extérieur (21).

4. Buse de canal chaud (1) selon la revendication 3,
**caractérisée en ce que**
quelques unes des ouvertures (19) forment un passage libre de la cavité périphérique (22) au côté extérieur du corps de tube extérieur (21).

5. Buse de canal chaud (1) selon la revendication 3 ou 4,
**caractérisée en ce que**
quelques unes des ouvertures (19) présentent un élément encastrable de fermeture (23), qui ferme le passage sinon libre de la cavité périphérique (22) au côté extérieur du corps de tube extérieur (21).

6. Buse de canal chaud (1) selon la revendication 5,
**caractérisée en ce que**
le nombre des éléments encastrables de fermeture (23) diminue par rapport au nombre des ouvertures (19) en direction de la pointe de buse (13) ou **en ce que** les ouvertures (19) qui sont adjacentes à la zone de la pointe de buse (13) sont réalisées sans élément encastrable de fermeture (23) et les ouvertures (19) qui se trouvent dans le corps de tube extérieur (21) en direction du côté entrée de canal (12) présentent davantage d'éléments encastrables de fermeture (23) ou en présentent toutes.

7. Buse de canal chaud (1) selon la revendication 5 ou 6,
**caractérisée en ce que**
les éléments encastrables de fermeture (23) dans les ouvertures (19) situées plus près du côté entrée de canal (12) sont placés, vus depuis la surface extérieure du corps de tube extérieur (21), plus profondément dans les ouvertures (19).

8. Buse de canal chaud (1) selon l'une des revendications précédentes,
**caractérisée en ce que**
les éléments encastrables de fermeture (23) sont réalisés en une seule pièce avec la structure en nid d'abeille (18), avec des cloisons (27) présentes entre les ouvertures (19) de la structure en nid d'abeille (18), et fabriqués selon un procédé de fabrication additive.

9. Buse de canal chaud (1) selon l'une des revendications précédentes,
**caractérisée en ce que**
le corps de base (17) présente, à l'extrémité inférieure se terminant avec le côté entrée de canal (12), une partie socle (24) et, en dessous de la pointe de buse (13), une partie de support (25), la cavité périphérique (22) s'étendant le long de l'axe central (14), de la partie socle (24) à la partie de support (25), la structure en nid d'abeille (18) étant placée sur l'essentiel de la longueur de la cavité périphérique (22) dans le corps de tube extérieur (21).

10. Buse de canal chaud (1) selon l'une des revendications précédentes,
**caractérisée en ce que**
un écrou de fixation (26) est placé de manière imperdable sur la partie socle (24), au moyen duquel la buse de canal chaud (1) peut être fixée sur une plaque de répartition.

11. Buse de canal chaud (1) selon l'une des revendications précédentes,
**caractérisée en ce que**
les ouvertures (19) présentent une dimension d'ouverture (28) qui correspond à environ 15 % à 40 % du diamètre extérieur du tube de buse (10).
